# EUROPÄISCHE PATENTSCHRIFT

(11) **EP 3 458 617 B1**
(45) Veröffentlichungstag und Bekanntmachung des Hinweises auf die Patenterteilung: **30.03.2022**
(21) Anmeldenummer: 17723352.5
(22) Anmeldetag: 11.05.2017
(51) Int. Cl.: C22C 12/00, C22C 13/00, C22C 19/03, C22C 21/00, C22C 38/02, C22C 38/04, C22C 38/44, C22C 9/00, C22C 9/06, F16C 17/02, F16C 33/14, B32B 15/01, C21D 9/40, F16C 33/12

(54) **VERFAHREN ZUR HERSTELLUNG VON GLEITLAGERVERBUNDWERKSTOFFEN, GLEITLAGERVERBUNDWERKSTOFF UND GLEITELEMENT AUS SOLCHEN GLEITLAGERVERBUNDWERKSTOFFEN**
METHOD FOR PRODUCING PLAIN-BEARING COMPOSITE MATERIALS, PLAIN-BEARING COMPOSITE MATERIAL, AND SLIDING ELEMENT MADE OF SUCH PLAIN-BEARING COMPOSITE MATERIALS
PROCÉDÉ DE FABRICATION DE MATÉRIAUX COMPOSITES DE PALIER LISSE, MATÉRIAU COMPOSITE DE PALIER LISSE ET ÉLÉMENT COULISSANT FAIT DE MATÉRIAUX COMPOSITES DE PALIER LISSE DE CE TYPE

(30) Priorität: 18.05.2016 DE 102016208482
(43) Veröffentlichungstag der Anmeldung: 27.03.2019
(73) Patentinhaber: Federal-Mogul Wiesbaden GmbH, 65201 Wiesbaden (DE)
(72) Erfinder: ANDLER, Gerd, 65307 Bad Schwalbach (DE)
(74) Vertreter: WSL Patentanwälte Partnerschaft mbB
(86) Internationale Anmeldenummer: PCT/EP2017/061311
(87) Internationale Veröffentlichungsnummer: WO 2017/198534

(56) Entgegenhaltungen:
- DE-A1-102005 063 325
- DE-A1-102009 002 894
- DE-A1-102013 208 497
- DE-A1-102014 207 332
- GB-A- 2 384 007
- JP-B2- 3 632 924
- KR-B1- 100 921 408
- US-A1- 2002 026 855
- SPIEKERMANN P: "Alloys - a special problem of patent law", NONPUBLISHED ENGLISH TRANSLATION OF DOCUMENT, 31 December 2000 (2000-12-31), pages 1-20, XP002184689,

## Beschreibung

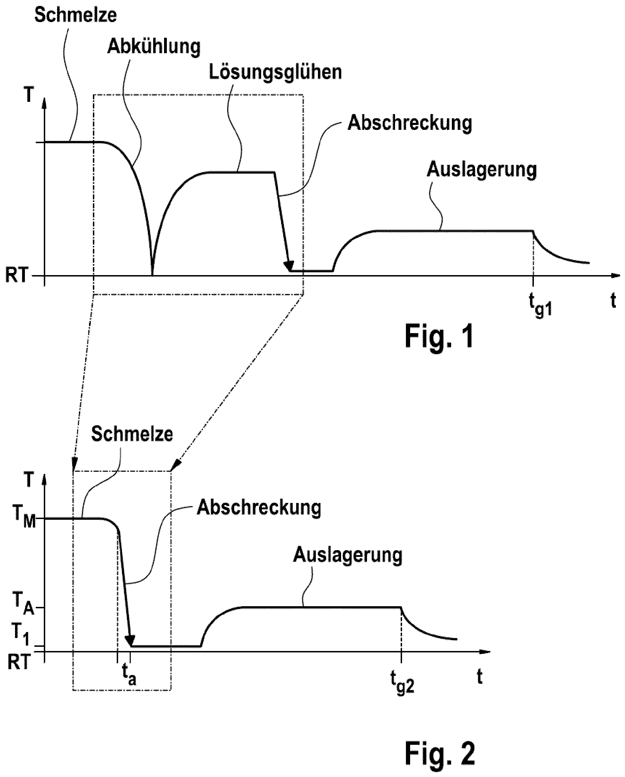

Die Erfindung betrifft ein Verfahren zur Herstellung von Gleitlagerverbundwerkstoffen, bei dem ein Lagermetallschmelze aus einer Kupferlegierung auf ein Bandmaterial aus einem Stahl aufgegossen und das Verbundmaterial aus Bandmaterial und Lagermetall anschließend einer Wärmebehandlung unterzogen wird. Gleitlagerverbundwerkstoffe werden bisher in der Weise hergestellt, dass man nach dem Aufgießen des Lagermetalls das Verbundmaterial auf Raumtemperatur abkühlen lässt und anschließend einer Wärmebehandlung unterzieht, die einen Glühschritt, Abschrecken auf Raumtemperatur und danach eine Ausscheidungshärtung (Auslagern) vorsieht. Dieser Verfahrensablauf ist in der Figur 1 schematisch dargestellt, wobei die Temperatur T der einzelnen Verfahrensabschnitte gegen die Zeit t aufgetragen ist, und wird beispielsweise in der DE 496 935 beschrieben. RT bezeichnet die Raumtemperatur (20°C) und T_{M} die Schmelztemperatur.

Der Glühschritt wird auch als Lösungsglühen bezeichnet, was nach DIN 17014 ein Glühen zum Lösen ausgeschiedener Bestandteile in Mischkristallen bedeutet. Zum Beispiel bei austenitischen Stählen werden bestimmte, ausscheidungsfähige Legierungselemente im γ- Mischkristall gelöst. Durch die folgende, hinreichend schnelle Abkühlung erhält man einen übersättigten γ- Mischkristall, der ausgehärtet werden kann.

Für die nach der Glühbehandlung erzielte Korngröße haben neben der Glühtemperatur die Verweilzeit und die Abkühlgeschwindigkeit Bedeutung. Sehr langsames Abkühlen, z. B. im Ofen, bewirkt, dass die Umwandlung der γ- Phase bei verhältnismäßig hoher Temperatur erfolgt. Die Zahl der in der Zeiteinheit gebildeten Keime ist dennoch gering, während die Kristallisationsgeschwindigkeit groß ist. Dadurch sind die Voraussetzungen für ein gröberes Korn gegeben. Bei raschem Abkühlen entsteht ein feineres Gefüge, weil die Umwandlung erst bei tieferen Temperaturen abläuft. Legierungszusätze können das Kornwachstum durch Bildung von Ausscheidungen behindern (siehe BARTHOLOME E. 1982 Ullmanns Encyklopädie der technischen Chemie, Band 22, 4. Aufl., S. 28, Verlag Chemie, Weinheim).

Bei Legierungen wird das Lösungsglühen auch als Homogenisierungsglühen bezeichnet.

Da fast alle technischen Legierungen ganz oder zu einem erheblichen Teil aus Mischkristallen bestehen, hat man bei gegossenen Metallen und Legierungen häufig mit mehr oder weniger ausgeprägten Kristallseigerungen zu rechnen. Da aber in einer Legierung stets ein möglichst gleichmäßiges Gefüge erwünscht ist, ist man bestrebt, diese Kristallseigerungen zu beseitigen. Dies geschieht durch das Homogenisierungsglühen. Die inhomogene, geseigerte Legierung wird bei möglichst hohen Temperaturen so lange geglüht, bis sich durch Diffusion die Konzentrationsunterschiede zwischen Kristallrand und Kern ausgeglichen haben (siehe SCHUMANN H. 1989 Metallographie, 13. Aufl., S. 376, Deutscher Verlag für Grundstoffindustrie, Leipzig).

Auslagern bedeutet Halten auf Raumtemperatur (Kaltauslagern) oder Halten auf einer höheren Temperatur (Warmauslagern), um Entmischungen und/oder Ausscheidungen aus übersättigten Mischkristallen herbeizuführen. Bei der Verarmung des übersättigten Mischkristalls können Ausscheidungen auftreten, die gleichmäßig (kontinuierlich) oder ungleichmäßig (diskontinuierlich) ablaufen. Derartige Ausscheidungsvorgänge spielen z. B. beim Anlassen von gehärtetem Stahl eine wichtige Rolle, da Martensit ein übersättigter Mischkristall ist und auch gegebenenfalls Carbid ausscheiden kann. Bei Stählen, die Sondercarbid-bildende Legierungselemente enthalten, werden bei Anlasstemperaturen von 450°C bis 650°C die Carbide dieser Elemente aus dem Martensit ausgeschieden und bewirken eine Sekundärhärtung (siehe BARTHOLOME E.1982 Ullmanns Encyklopädie der technischen Chemie, Band 22, 4. Aufl., S. 34, Verlag Chemie, Weinheim).

Einige Kupferlegierungen sind aushärtbar. Für die Härtbarkeit einer Kupferlegierung müssen drei Voraussetzungen erfüllt sein. Es muss eine beschränkte Löslichkeit für die Legierungskomponente im festen Zustand vorliegen, die Löslichkeit muss mit sinkender Temperatur abnehmen und die Trägheit der Gleichgewichtseinstellung muss so groß sein, dass der bei hoher Temperatur vorliegende homogene Mischkristall nach dem Abschrecken im festen Zustand erhalten bleibt (s. DKI, Wärmebehandlung von Kupferwerkstoffen, https://www.kupferinstitut.de/de/werkstoffe/verarbeitung/waermebehandlung.
html).

Aus der DE 10 2005 063 324 B4 ist ein übliches Verfahren zur Herstellung von Gleitlagerverbundmaterial, insbesondere für Gleitlagerelemente, wie Gleitlagerschalen bekannt. Dieses Verfahren sieht folgende Verfahrensschritte vor:
- Aufgießen einer Kupferlegierung auf eine Trägerschicht aus Stahl zur Herstellung eines Verbundes,
- thermomechanische Behandlung mit folgenden Schritten:
- mindestens ein erstes Glühen des Verbundes bei 550°C bis 700°C für zwei bis fünf Stunden,
- mindestens ein erstes Walzen des Verbundes, wobei ein Umformgrad von 20 bis 30 % durchgeführt wird,
- mindestens ein zweites Glühen bei 500°C bis 600°C für mehr als eine Stunde.

Das erste Glühen ist ein Homogenisierungsglühen und das zweite Glühen ein Rekristallisationsglühen. Ein Auslagern findet bei diesem Verfahren nicht statt.

Ein derart hergestelltes Verbundmaterial genügt jedoch nicht den gestiegenen Anforderungen an die Festigkeit von Gleitlagern. Unter dem Begriff Festigkeit werden die Begriffe Zugfestigkeit, Streckgrenze und Bruchdehnung zusammengefasst.

Die US 2002/026855 A1 offenbart ein Verfahren, bei dem ein Pulver eines Lagermetalls hergestellt wird und dieses Pulver auf eine Stahlplatte aufgebracht und anschließend gesintert wird.

Die DE 10 2013 208497 A1 beschreibt ebenfalls ein Verfahren, bei ein Pulver auf ein Substrat aufgebracht wird und dieses gesintert wird. Es werden zwei weitere Verfahren erwähnt, bei denen der Auftrag über Gießen oder Plattieren erfolgt.

Aufgabe der Erfindung ist es daher, ein Herstellungsverfahren für Gleitlagerverbundwerkstoffe anzugeben, das schneller und kostengünstiger durchgeführt werden kann und gleichzeitig zu einem Gleitlagerverbundwerkstoff führt, der verbesserte mechanische Eigenschaften, insbesondere eine höhere Festigkeit und größere Härte aufweist.

Diese Aufgabe wird mit einem Verfahren mit den Merkmalen des Anspruchs 1 gelöst.

Das Verfahren ist dadurch gekennzeichnet, dass nach dem Aufgießen des Lagermetalls das Verbundmaterial abgeschreckt wird und danach ein Auslagerungsvorgang angeschlossen wird.

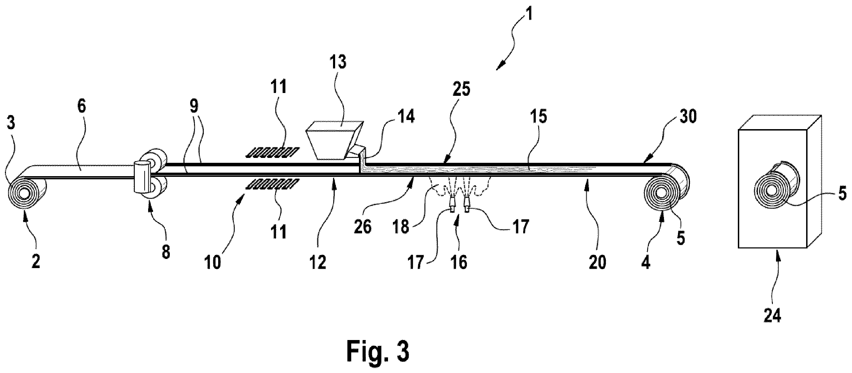

"Danach" bedeutet nicht nur "unmittelbar danach", sondern umfasst auch das Auslagern zu einem späteren Zeitpunkt, z. B. nach dem Aufwickeln des Verbundwerkstoffes in einem Haubenofen, wie dies im Zusammenhang mit der Fig. 3 beschrieben wird.

Die sich an das Aufgießen anschließende Wärmebehandlung umfasst somit das Abschrecken des Verbundmaterials und den Auslagerungsvorgang, der auch als Auslagern bezeichnet wird.

Unter Abschrecken wird ein schnelles Abkühlen von der Schmelztemperatur auf eine vorgegebene Temperatur verstanden. Ein solcher Abschreckvorgang dauert weniger als zwei Minuten, besonders bevorzugt weniger als eine Minute.

Das Verfahren wird zwischen dem Abschrecken und dem Auslagerungsvorgang ohne Glühschritt durchgeführt.

Durch das Einsparen des Glühschrittes wird das Herstellungsverfahren zeitlich verkürzt. Auch werden Energie und Kosten zum Aufheizen des Verbundmaterials zur Durchführung des Glühschrittes eingespart.

Es hat sich ferner gezeigt, dass durch die Kombination von Aufgießen, Abschreckvorgang und anschließendem Auslagern die mechanischen Eigenschaften des Verbundmaterials deutlich verbessert werden konnten.

Durch das Aufgießen der heißen Lagermetallschmelze und durch das anschließende Abschrecken wird der Stahl einer Wärmebehandlung unterzogen, die einer Wärmehandlung zum Härten von Stahl ähnlich ist. Die typischen Schmelztemperaturen für Lagermetalle, insbesondere aus Kupferlegierungen, liegen bei 1000°C bis 1250°C, was dem Bereich der Glühtemperatur von 1000°C bis 1100°C entspricht, der typischerweise zum Aushärten von austenitischen Stählen eingesetzt wird.

Die Härte des Stahls kann im Bereich von 150 HBW 1/5/30 bis 250 HBW 1/5/30 eingestellt werden.

Der Vorteil des erfindungsgemäßen Verfahrens besteht somit darin, dass das Aufgießen in Kombination mit dem Abschreckvorgang der Schmelze zum Aushärten des Stahls genutzt wird.

Das Abschrecken der Schmelze des Lagermetalls hat den weiteren Vorteil, dass die Kristallisation verhindert wird und die ungeordnete Flüssigkeitsstruktur des Lagermetalls eingefroren wird. Eine Kristallseigerung im Lagermetall kann somit gar nicht erst entstehen, sodass ein Lösungsglühen zum Homogenisieren entfallen kann und die Auslagerung angeschlossen werden kann.

Die eingefrorene ungeordnete Mischkristallstruktur als Ausgangsstruktur für das Auslagern hat den Vorteil, dass z. B. die Härte des Lagermetalls durch geeignete Wahl von Temperatur und Zeitdauer der Wärmebehandlung in einem weiten Bereich gezielt eingestellt werden kann. Dies gilt auch für andere mechanische Eigenschaften, wie die Zugfestigkeit (tensile strength), die Streckgrenze (yield strength) und für die Bruchdehnung sowie für die elektrische Leitfähigkeit, die eng mit der Wärmeleitfähigkeit verknüpft ist.

Es hat sich gezeigt, dass für den Auslagerungsvorgang ein Temperaturbereich von 350°C bis 520°C und eine Zeitdauer von vier Stunden bis zehn Stunden zur gezielten Einstellung der mechanischen Eigenschaften notwendig ist. Hierbei werden vorzugsweise die langen Zeitdauern mit den niedrigen Auslagerungstemperaturen kombiniert und umgekehrt.

Für das Lagermetall kann die Härte im Bereich von 100 bis 200 HBW 1/5/30 und die elektrische Leitfähigkeit im Bereich von 20 bis 50 % IACS eingestellt werden. IACS bedeutet International Annealed Copper Standard. Hierbei wird die elektrische Leitfähigkeit als Prozentwert der elektrischen Leitfähigkeit in reinem geglühtem Kupfer ausgedrückt. 100 % IACS entsprechen einer elektrischen Leitfähigkeit von 58 · 10⁶ S/m. Für die Zugfestigkeit können vorzugsweise Werte zwischen 380 MPa und 500 MPa, für die Streckgrenze vorzugsweise Werte von 250 bis 450 MPa und für die Bruchdehnung vorzugsweise Werte von 5 bis 35 % eingestellt werden.

Vorzugsweise wird der Auslagerungsvorgang bei einer Temperatur zwischen 350°C und 420°C durchgeführt. Die Auslagerung in diesem Temperaturbereich führt einerseits nur zu einer geringen Härtesteigerung des Lagermetalls gegenüber dem Gusszustand, wobei die erreichbare Härte im Wesentlichen der Härte entspricht, die mit den herkömmlichen, ein Lösungsglühen aufweisenden Verfahren vergleichbar ist.

Andererseits kann aber mit dieser Maßnahme gegenüber dem Stand der Technik eine deutliche Steigerung der Streckgrenze des Lagermetalls eingestellt werden. Der Gleitlagerverbundwerkstoff ist daher sehr gut für den Schwerlasteinsatz, wie z. B. in schweren LKWs, Baumaschinen oder anderen schweren Nutz- und Arbeitsmaschinen geeignet, in denen dieser Gleitlagerverbundwerkstoff für Gleitelemente, wie z. B. Gleitlagerschalen, Gleitlagerbuchsen oder Gleitsegmente zum Einsatz kommt.

Vorzugsweise wird der Auslagerungsvorgang bei einer Temperatur zwischen > 420°C bis 520°C durchgeführt. Die Auslagerung in diesem Temperaturbereich hat den Vorteil, dass die Härte, die Zugfestigkeit und die Streckgrenze des Lagermetalls gegenüber dem Stand der Technik deutlich gesteigert und gezielt eingestellt werden kann. Der Gleitlagerverbundwerkstoff ist daher sehr gut für den Einsatz im industriellen Bereich geeignet, wie z. B. Ventilplatten von Hydraulikpumpen.

Der Auslagerungsvorgang hat keinen Einfluss auf die bereits durch das Abschrecken erzielte Härte des Stahls, sodass die Parameter des Auslagerungsvorgangs, wie Temperatur und Haltezeit, ausschließlich zur Einstellung der Eigenschaften des Lagermetalls gewählt werden können.

Das Verfahren hat den Vorteil, dass ein Verbundwerkstoff hergestellt werden kann, der über einen sehr harten Stahl in Kombination mit unterschiedlich harten Lagermetallschichten verfügt.

Vorzugsweise wird als Stahl ein austenitischer Stahl verwendet, wobei besonders bevorzugt ein Stahl mit einem Kohlenstoffanteil von 0,15 Gew.-% bis 0,40 Gew.-% verwendet wird. Beispielhafte Stähle und deren Zusammensetzung finden sich in der nachfolgenden Tabelle 1.

**Tabelle 1**

| Stahlbezeichnung | | Chemische Zusammensetzung (Massenanteil in %) | | | | | | | | |
|---|---|---|---|---|---|---|---|---|---|---|
| Kurzname | Werkstoff - nummern | C | Si max. | Mn | P max. | S | Cr max. | Mo max | Ni max. | Cr + Mo + Ni max. |
| Qualitätsstähle | | | | | | | | | | |
| C35 | 1.0501 | 0,32 bis 0,39 | 0,40 | 0,50 bis 0,80 | 0,045 | max. 0,045 | 0,40 | 0,10 | 0,40 | 0,63 |
| C40 | 1.0511 | 0,37 bis 0,44 | 0,40 | 0,50 bis 0,80 | 0,045 | max. 0,045 | 0,40 | 0,10 | 0,40 | 0,63 |

| Edelstähle | | | | | | | | | | |
|---|---|---|---|---|---|---|---|---|---|---|
| C22 E | 1.1151 | 0,17 bis 0,24 | 0,40 | 0,40 bis 0,70 | 0,030 | max. 0,035 | 0,40 | 0,10 | 0,40 | 0,63 |
| C22 P | 1.1149 | | | | | 0,020 bis 0,040 | | | | |

Bei diesen Stählen wird die austenitische Phase des Stahls durch den Abschreckvorgang eingefroren.

Es wird ein Lagermetall aus einer Kupferlegierung aufgegossen. Es hat sich herausgestellt, dass die mechanischen Eigenschaften des Lagermetalls in einem weiten Bereich eingestellt werden können, wenn als Lagermetall eine Kupferlegierung, vorzugsweise eine aushärtbare Kupferlegierung und insbesondere eine Kupfer- Nickel- Legierung, eine Kupfer- Eisen- Legierung, eine Kupfer- Chrom-Legierung oder eine Kupfer- Zirkon- Legierung verwendet wird.

Die Zusammensetzungen bevorzugter Kupferlegierungen sind in der Tabelle 2 zusammengestellt.

**Tabelle 2**

| | **EN Nummer** | **UNS Nummer** | **Cu** | **Cr** | **Zr** | **Ni** | **Si** | **Fe** | **P** | **Mn** | **Zn** | **sonst.** | **WL W/(mK)** | **Zustand** |
|---|---|---|---|---|---|---|---|---|---|---|---|---|---|---|
| **CuCr1Zr** | CW106C | C18150 | Rest | 0,5-1,2 | 0,03-0,3 | | max. 0,1 | max. 0,08 | | | | max. 0,2 | 320 | ausgehärtet |
| **CuCr1** | CW105C | C18200 | Rest | 0,3-1,2 | | | | | | | | | 325 | |
| **CuFe2P** | CW107C | C19400 | Rest | | | | | 2,1-2,6 | 0,015-0,15 | | 0,05-0,2 | | 260 | |
| **CuNi1P** | CW108C | C19000 | Rest | | | 0,8-1,2 | | | 0,15-0,25 | | | max. 0,1 | 251 | ausgehärtet |
| **CuNi1Si** | CW109C | C19010 | Rest | | | 1,0-1,6 | 0,4-0,7 | max. 0,2 | | max. 0,1 | | max. 0,3 | 150-250 | ausgehärtet |
| **CuNi2Si** | CW111C | C70260 | Rest | | | 1,6-2,5 | 0,4-0,8 | max. 0,2 | | max. 0,1 | | max. 0,3 | 160 | |
| **CuNi3Si** | CW112C | C70250 | Rest | | | 2,6-4,5 | 0,8-1,3 | max. 0,2 | | max. 0,1 | | max. 0,5 | 190 | |
| **CuNi2Si** | CS-4 | | Rest | | | 1,5-2,5 | 0,4-0,8 | max. 0,7 | | | | max. 0,5 | | |
| **CuZr** | CW120C | C15000 | Rest | | 0,1-0,2 | | | | | | | max. 0,1 | 310-330 | |

EN bedeutet Werkstoffnummer nach europäischer Norm und UNS bedeutet Werkstoffnummer nach amerikanischer Norm (ASTM).

Vorzugsweise wird der Abschreckvorgang unmittelbar nach dem Aufgießvorgang begonnen. Dadurch wird verhindert, dass nach dem Aufgießvorgang eine normale, d. h. ungesteuerte Abkühlung einsetzt, was den Nachteil hätte, dass sich das Lagermetallgefüge zu sehr dem Gleichgewichtszustand annähert, was eine direkt im Anschluss an das Aufgießen vorgesehene Ausscheidungshärtung erschwert oder unmöglich macht.

Vorzugsweise beginnt der Abschreckvorgang innerhalb von 15 - 25 Sekunden nach dem Aufgießvorgang.

Das Verbundmaterial wird auf eine Temperatur T₁ von 150°C bis 250°C abgeschreckt. Die weitere Abkühlung auf Raumtemperatur erfolgt passiv durch Abkühlenlassen. Das Abkühlen kann auch noch im aufgewickelten Zustand des Verbundmaterials erfolgen.

Vorzugsweise wird der Abschreckvorgang mit einer Abschreckrate von 10 K/s - 30 K/s durchgeführt. Bei einer geringeren Abschreckrate als 10 K/s kann nicht sichergestellt werden, dass das Lagermetall in einem übersättigten Mischkristallzustand vorliegt, was eine Ausscheidungshärtung erschwert oder unmöglich macht.

Eine höhere Abschreckrate als 30 K/s ist nicht erforderlich, weil sich in Versuchen gezeigt hat, dass Abschreckraten > 30 K/s hinsichtlich des Ausscheidungseffektes keinen Vorteil mehr bewirken.

Die Abschreckrate ist vorzugsweise an die jeweilige Legierung anzupassen. Es ist bevorzugt, dass das Abschrecken der Kupfer- Nickel- Legierung mit einer Abschreckrate von 15 K/s bis 25 K/s durchgeführt wird.

Es ist bevorzugt, dass das Abschrecken der Kupfer- Eisen- Legierung mit einer Abschreckrate von 15 K/s bis 25 K/s durchgeführt wird.

Es ist bevorzugt, dass das Abschrecken der Kupfer- Chrom- Legierung mit einer Abschreckrate von 10 K/s bis 20 K/s durchgeführt wird.

Es ist bevorzugt, dass das Abschrecken der Kupfer- Zirkon- Legierung mit einer Abschreckrate von 10 K/s bis 25 K/s durchgeführt wird.

Die unterschiedlichen Abschreckraten für die einzelnen Kupferlegierungen sind erforderlich, weil je nach Legierungssystem sich das Zweiphasengebiet bestehend aus dem α- Mischkristall und den Hartteilchen über unterschiedlich große Temperaturbereiche erstreckt. Folglich muss für die Legierungssysteme mit einem breiten Zweiphasengebiet eine höhere Abkühlgeschwindigkeit realisiert werden, um möglichst weniger Ausscheidungen bei dem Gießprozess zu generieren als für die Systeme mit schmalerem Zweiphasengebiet.

Das Abschrecken wird mit einem Kühlmedium, vorzugsweise mittels einer Abschreckflüssigkeit, insbesondere mittels eines Kühlöls, durchgeführt.

Vorzugsweise wird die Rückseite des Verbundmaterials mit der Abschreckflüssigkeit besprüht. Durch das Besprühen der Rückseite, d. h. der Stahlseite wird sichergestellt, dass zuerst der Stahl abgeschreckt und dann erst das Lagermetall abgekühlt wird. Dadurch wird sichergestellt, dass jedenfalls die gewünschte Härte des Stahls erreicht wird, zumal die Härte des Lagermetalls ohnehin erst durch den anschließenden Auslagerungsvorgang eingestellt wird.

Bei der Herstellung des Gleitlagerverbundwerkstoffes wird vorzugsweise ein Band aus Stahl von einer Rolle abgewickelt und kontinuierlich den einzelnen nacheinander angeordneten Behandlungsstationen zugeführt. Der fertige Gleitlagerverbundwerkstoff wird am Ende des Herstellungsverfahrens wieder aufgewickelt und anschließend einer separaten Auslagerungsstation zugeführt.

Der Gleitlagerverbundwerkstoff wird danach oder zu einem späteren Zeitpunkt zu Gleitlagerelementen, wie z. B. Gleitlagerhalbschalen, Gleitlagerplatten etc. weiter verarbeitet. Bei der Weiterverarbeitung werden bei Bedarf weitere Schichten, insbesondere eine Gleitschicht aufgebracht.

Vorzugsweise wird das Bandmaterial vor dem Aufgießen auf eine Temperatur T₀ im Bereich von 900°C bis 1050°C vorgeheizt. Dieses Vorheizen hat den Vorteil, dass sich die Lagermetallschmelze beim Aufgießen vollständig über die komplette Bandbreite im flüssigen Zustand gleichmäßig ausbreiten kann, bevor die Erstarrung erfolgt.

Vorzugsweise wird das Vorheizen mit Heizstrahlern durchgeführt, die über und/ oder unter dem Bandmaterial angeordnet sind.

Weitere bevorzugte Verfahrensschritte sind das Profilieren des Stahlbandes vor dem Aufgießen, d. h. das Umformen des Randes des Stahlbands, das Abfräsen der Lagermetalloberfläche nach dem Abschrecken und Erstarren des Lagermetalls und das Entprofilieren, insbesondere das Entfernen von Randstreifen, nach dem Auslagern.

Der Gleitlagerverbundwerkstoff weist eine Trägerschicht aus Stahl und eine Lagermetallschicht aus einer gegossenen Kupferlegierung auf, wobei die Lagermetallschicht eine dendritische Gefügestruktur aufweist.

Unter einer dendritischen Struktur werden verästelte Wachstumsformen von Kristallen verstanden, die eine tannenbaumartige Struktur aufweisen und deren Ausbildungsform und Anordnung im Erstarrungsgefüge stark abhängig ist von den Abkühlbedingungen.

Die Trägerschicht weist vorzugsweise eine Härte von 150 HBW 1/5/30 bis 250 HBW 1/5/30 auf.

Vorzugsweise weist die Trägerschicht eine Härte von 190 bis 210 HWB 1/5/30 auf.

Vorzugsweise weist die Lagermetallschicht eine Härte von 100 HBW 1/5/30 bis 200 HBW 1/5/30 auf.

Vorzugsweise weist die Lagermetallschicht eine Härte von 100 bis 180 HBW 1/5/30 auf.

Vorzugweise weist die Lagermetallschicht eine Zugfestigkeit von 380 MPa bis 500 MPa, besonders bevorzugt von 390 bis 480 MPa auf.

Vorzugsweise liegt die Streckgrenze der Lagermetallschicht bei 250 MPa bis 450 MPa.

Die Bruchdehnung der Lagermetallschicht liegt vorzugsweise bei 5 % bis 35 %.

Die Kupferlegierung ist vorzugsweise eine Kupfer- Nickel- Legierung, eine Kupfer- Eisen- Legierung, eine Kupfer- Chrom- Legierung oder eine Kupfer- Zirkon-Legierung.

Der Legierungsanteil von Nickel liegt vorzugsweise im Bereich von 0,5 bis 5 Gew.-%, besonders bevorzugt im Bereich von 1 bis 3 Gew.-%.

Der Legierungsanteil von Eisen liegt vorzugsweise im Bereich von 1,5 bis 3 Gew.-%, besonders bevorzugt im Bereich von 1,9 bis 2,8 Gew.-%.

Der Legierungsanteil von Chrom liegt vorzugsweise im Bereich von 0,2 bis 1,5 Gew.-%, besonders bevorzugt im Bereich von 0,3 bis 1,2 Gew.-%.

Der Legierungsanteil von Zirkon liegt vorzugsweise im Bereich von 0,02 bis 0,5 Gew.-%, besonders bevorzugt im Bereich von 0,3 bis 0,5 Gew.-%.

Der Legierungsanteil von Phosphor liegt vorzugsweise im Bereich von 0,01 bis 0,3 Gew.-%, der Anteil von Mangan vorzugsweise im Bereich von 0,01 bis 0,1 Gew.-% und der Anteil von Zink vorzugsweise im Bereich von 0,05 bis 0,2 Gew.- %

Das Gleitlagerelement weist den Gleitlagerverbundwerkstoff auf sowie vorzugsweise eine Gleitschicht, die auf der Lagermetallschicht aufgebracht ist.

Es ist weiterhin von Vorteil, wenn die Gleitschicht aus einer Galvanikschicht besteht. Galvanikschichten sind multifunktionale Werkstoffe, die sich unter anderem durch gute Einbettfähigkeit für Fremdpartikel, durch Einlaufeigenschaften bzw. Anpassung an den Gleitpartner, als Korrosionsschutz und durch gute Notlaufeigenschaften im Fall von Ölmangel auszeichnen. Insbesondere bei der Verwendung von niedrigviskosen Ölen sind Galvanikschichten von Vorteil, weil hierbei häufiger Mischreibungszustände auftreten können, bei denen die genannten Eigenschaften zum Tragen kommen.

Die Galvanikschicht besteht vorzugsweise aus einer Zinn- Kupfer- Legierung, einer Wismut- Kupfer- Legierung oder aus reinem Wismut.

In den Zinn- Kupfer- Legierungen liegt der Anteil der von Kupfer vorzugsweise bei 1 - 10 Gew.-%. In den Wismut-Kupferlegierungen liegen die bevorzugten Anteile von Kupfer bei 1 - 20 Gew.-%.

Ein weiteres bevorzugtes Verfahren ist das PVD-Verfahren und hier insbesondere das Sputtern. Sputter-Schichten bestehen vorzugsweise aus Aluminium-Zinnlegierungen, Aluminium-Zinn-Kupferlegierungen, Aluminium-Zinn-Nickel-Mangan-Legierungen, Aluminium-Zinn-Silizium-Legierungen oder Aluminium-Zinn-Silizium-Kupferlegierungen.

Vorzugsweise beträgt in diesen Legierungen der Zinnanteil 8 - 40 Gew.-%, der Kupferanteil 0,5 - 4,0 Gew.-%, der Siliziumanteil 0,02 - 5,0 Gew.-%, der Nickelanteil 0,02 - 2,0 Gew.-% und der Mangananteil 0,02 - 2,5 Gew.-%.

Gemäß einer weiteren Ausführungsform kann die Gleitschicht aus einer Kunststoffschicht bestehen. Kunststoffschichten werden vorzugsweise mittels eines Lackier- oder Druckverfahrens, wie z. B. Sieb- oder Kissendruck, durch Tauchen oder Spritzen aufgetragen.

Die zu beschichtende Oberfläche muss hierzu durch Entfetten, chemisches oder physikalisches Aktivieren und/oder mechanisches Anrauhen, beispielsweise durch Sandstrahlen oder Schleifen, geeignet vorbereitet werden.

Die Matrix der Kunststoffschichten besteht vorzugsweise aus hochtemperaturbeständigen Harzen wie PAI. Außerdem können in die Matrix Zusätze wie MoS₂, Bornitrid, Graphit oder PTFE eingelagert sein. Die Anteile der Zusätze einzeln oder in Kombination liegen vorzugsweise zwischen 5 und 50 Vol.%.

Beispiele für Galvanikgleitschichten sind in der Tabelle 3 zusammengestellt.

**Tabelle 3 (Angaben in Gew.-%)**

| Beispiel | 4 | 5 | 6 |
|---|---|---|---|
| Zinn | 94 | | |
| Wismut | | 100 | 95 |
| Kupfer | 6 | | 5 |

Eine bevorzugte galvanische Gleitschicht weist eine Zinnmatrix auf, in die Zinn-Kupfer-Partikel eingelagert sind, die aus 39 - 55 Gew.-% Kupfer und Rest Zinn bestehen. Die Partikeldurchmesser liegen vorzugsweise bei 0,5 µm bis 3 µm.

Die galvanische Schicht wird vorzugsweise auf einer Zwischenschicht, insbesondere auf zwei Zwischenschichten aufgebracht, wobei die erste Zwischenschicht aus Ni und die darüber liegende zweite Zwischenschicht aus Nickel und Zinn besteht. Der Ni-Anteil der zweiten Zwischenschicht liegt vorzugsweise bei 30 - 40 Gew.-% Ni. Die erste Zwischenschicht hat vorzugsweise eine Dicke von 1 bis 4 µm und die zweite Zwischenschicht vorzugsweise eine Dicke von 2 bis 7 µm.

Beispiele für Sputter-Schichten sind in der Tabelle 4 zusammengefasst.

**Tabelle 4 (Angaben in Gew.-%)**

| Beispiel | 7 | 8 | 9 | 10 | 11 |
|---|---|---|---|---|---|
| Al | Rest | Rest | Rest | Rest | Rest |
| Sn | 22 | 35 | 25 | 10 | 20 |
| Cu | 0,7 | 1,2 | 0,7 | 0,5 | 0,5 |
| Si | | | 2,5 | | 1,5 |
| Mn | | | | 1,5 | |
| Ni | | | | 0,7 | 0,7 |

Beispiele für Kunststoffgleitschichten sind in der Tabelle 5 zusammengefasst.

**Tabelle 5 (Angaben in Vol.%)**

| Beispiel | 12 | 13 | 14 | 15 | 16 |
|---|---|---|---|---|---|
| PAI | 70 | 80 | 70 | 75 | 65 |
| MoS₂ | 30 | | | | 20 |
| BN | | 20 | | | |
| Graphit | | | 30 | | |
| PTFE | | | | 25 | 15 |

Alle genannten Gleitschichten können mit den Lagermetallschichten aus den Kupferlegierungen kombiniert werden.

Das Gleitlagerelement ist vorzugsweise als Gleitlagerschale, als Ventilplatte oder Gleitsegment, wie z. B. Gleitführungsleiste, ausgebildet.

Beispielhafte Ausführungsformen werden nachfolgend anhand der Zeichnungen näher erläutert:
- Fig. 1: schematische Darstellung des Herstellungsverfahrens gemäß des Standes der Technik,
- Fig. 2: schematische Darstellung des erfindungsgemäßen Verfahrensablaufs,
- Fig. 3: eine schematische Darstellung einer Bandgießanlage,
- Fig. 4a und b: perspektivische Darstellungen zweier Gleitelemente,
- Fig. 5: graphische Darstellung der Härte als Funktion des Gefügezustandes für ein Vergleichsbeispiel,
- Fig. 6: graphische Darstellung der Lagermetallfestigkeit als Funktion des Gefügezustandes für das Vergleichsbeispiel,
- Fig. 7: graphische Darstellung der Härte für erfindungsgemäße Beispiele 1 bis 3,
- Fig. 8: graphische Darstellung der Lagermetallfestigkeit für erfindungsgemäße Beispiele 1 bis 3,
- Fig. 9: ein Eisen-Kohlenstoff-Diagramm von Stahl,
- Fig. 10: das Zustandsdiagramm für die Lagermetalllegierung CuNi2Si,
- Fig. 11: ein Schliffbild einer Gußgefügestruktur,
- Fig. 12: ein Schliffbild einer dendritischen Gefügestruktur einer Lagermetallschicht gemäß Beispiel 1,
- Fig. 13: ein Schliffbild einer weiteren dendritischen Gefügestruktur der Lagermetallschicht gemäß Beispiel 2,
- Fig. 14: ein Schliffbild einer weiteren dendritischen Gefügestruktur der Lagermetallschicht gemäß Beispiel 3.

In der Figur 2 ist der erfindungsgemäße Verfahrensablauf schematisch dargestellt, wobei die Temperatur T der einzelnen Verfahrensschritte gegen die Zeit t aufgetragen ist. Die Schmelze wird z. B. mit einer Temperatur Tₘ von 1100°C auf das Bandmaterial aus Stahl aufgegossen und unmittelbar danach wird das Verbundmaterial auf eine Temperatur T₁ von ca. 150°C bis 250°C abgeschreckt. Der Abschreckvorgang dauert ca. tₐ= 1 bis 3 min. Daran schließt sich die Auslagerung bei einer Temperatur T_{A} von 350°C bis 520°C an. Die gesamte Verfahrensdauer t_{g2} ist somit kürzer als das Verfahren gemäß dem Stand der Technik (siehe Fig. 1, t_{g1}). Die Verkürzung entsteht dadurch, dass das komplette Homogenisierungsglühen (Lösungsglühung) entfällt.

Bei z. B. CuNi2Si sind nach dem Stand der Technik hierzu z. B. Aufheizzeiten von mehreren Stunden auf Zieltemperatur 750°C bis 800°C und Haltezeiten von mehreren Stunden erforderlich, woran sich dann das Abschrecken anschließt.

In der Figur 3 ist eine Bandaufgießanlage 1 schematisch dargestellt. In der Abwickelstation 2 befindet sich eine Stahlbandrolle 3, von der das Bandmaterial 6 aus Stahl abgewickelt wird. In einer anschließenden Profilierstation 8 werden die beiden Ränder 9 des Bandmaterials 6 nach oben umgebogen. In einer Aufheizstation 10 wird das Bandmaterial 6 mittels der Heizelemente 11, die oberhalbund unterhalb des Bandmaterials 6 angeordnet sind, auf eine Temperatur von bis zu T₀= 1050°C vorgeheizt.

In der anschließenden Aufgießstation 12 befindet sich ein Schmelzbehälter 13, in dem die Schmelze 14 des Lagermetalls vorgehalten wird. In der Aufgießstation 12 wird die Schmelze auf das Bandmaterial 6 aufgegossen. Das hergestellte Verbundmaterial 25 wird in einer Abschreckstation 16 mittels der Sprühdüsen 17 abgeschreckt. Die Sprühdüsen 17 sind unter dem Bandmaterial 6 angeordnet, sodass die Rückseite 26 des Verbundmaterials 25 mit der Abschreckflüssigkeit 18 besprüht wird, die aus Kühlöl besteht.

In der nachfolgenden Frässtation 20 erfolgt ein grobes Abfräsen der Lagermetalloberfläche, um die entstandene Gießhaut zu entfernen bzw. die Oberfläche einzuebnen.

Anschließend wird der Gleitlagerverbundwerkstoff 30 in einer Aufwickelstation 4 aufgewickelt. Die Ränder 9 dienen beim Aufwickeln als Abstandhalter, sodass die Lagermetallschicht nicht an der Rückseite des Stahlbandes anliegt. Ein Verkleben von Lagermetall und Stahl wird dadurch verhindert. Die Ränder 9 werden erst zu einem späteren Zeitpunkt entfernt, wenn der Gleitlagerverbundwerkstoff zur Weiterverarbeitung wieder abgewickelt wird.

Anschließend wird die Verbundwerkstoffrolle 5 in eine Auslagerungsstation 24 gebracht, wo in einem Haubenofen das abschließende Auslagern erfolgt, um die gewünschten mechanischen Eigenschaften des Lagermetalles einzustellen. Die Auslagerungszeit beträgt zwischen 4 h und 10 h bei Temperaturen von 350°C bis 520°C.

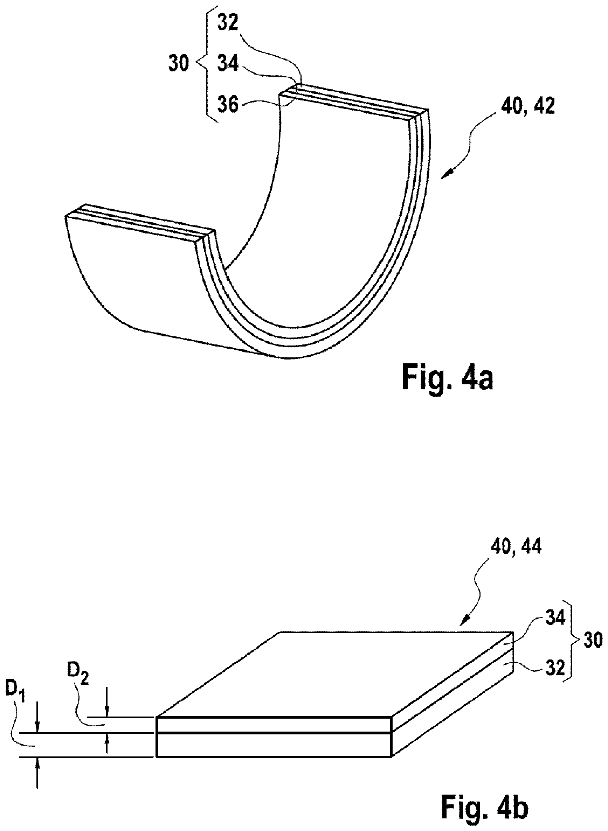

Der so hergestellte Gleitlagerverbundwerkstoff 30 wird danach weiterverarbeitet. Beispielsweise können hieraus durch Umformen Gleitlagerschalen hergestellt werden. In der Fig. 4a ist ein Gleitelement 40 in Gestalt einer Gleitlagerschale 42 dargestellt. Die Gleitlagerschale 42 weist eine Trägerschicht 32 aus Stahl, eine Gleitlagermetallschicht 34 und eine Gleitschicht 36 auf.

Die in Fig. 4b dargestellte Ventilplatte 44 hat den Aufbau Stahlrücken 32 mit der erfindungsgemäß hergestellten Lagermetallschicht 43. Bei solchen Anwendungsfällen wird aus Belastungsgründen in der Regel auf eine Gleitschicht 36 verzichtet. Die Dicke D₁ kann zwischen 1,5 mm und 8 mm betragen. Die Lagermetalldicke D₂ beträgt 0,5 - 3,0 mm.

Vergleichsbeispiel: Es wurde ein Gleitlagerverbundwerkstoff aus C22+CuNi2Si hergestellt, wobei das Herstellungsverfahren gemäß der DE 10 2005 063 324 B4 wie folgt durchgeführt wurde:
- Aufgießen
- Homogenisierungsglühung bei T= 700°C über 5h
- Walzen
- Rekristallisierungsglühung bei T= 550°C über 3h
- Egalisieren (Walzschritt mit geringer Umformung (max. 5 %), der dazu dient, die Härten von Stahl und Lagermetall in einem definierten Fenster einzustellen).

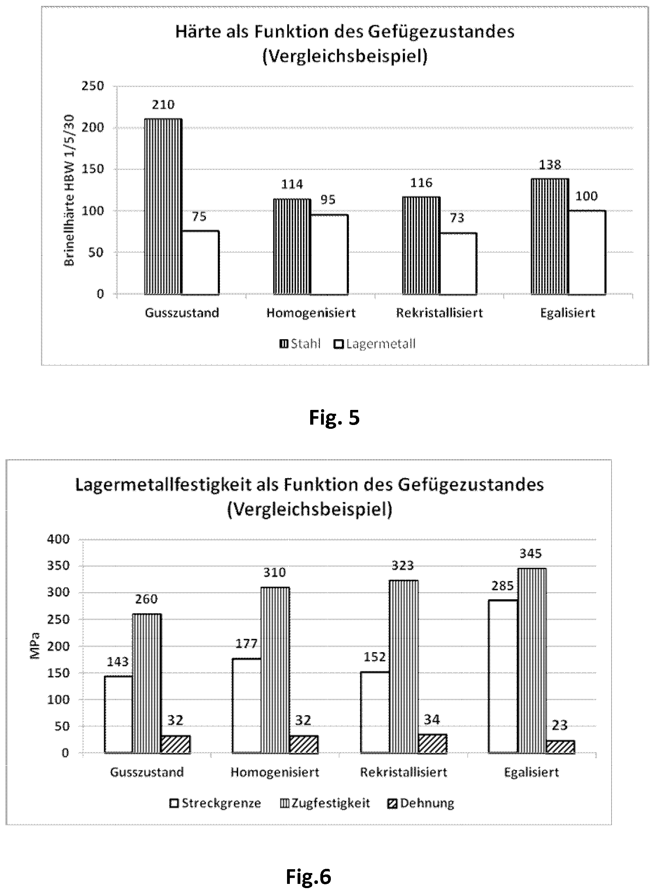

In Fig. 5 sind die Härtewerte des Stahls und des Lagermetalls nach dem Aufgießen, der Homogenisierungsglühung, der Rekristallisierungsglühung und dem Egalisieren dargestellt.

Der Gleitlagerverbundwerkstoff weist am Ende des Herstellungsverfahrens eine Stahlhärte von 138 HBW 1/5/30 und eine Lagermetallhärte von 100 HBW 1/5/30 auf. Die entsprechenden Festigkeitswerte sind in Fig. 6 dargestellt. Die elektrische Leitfähigkeit ist in IACS- Einheiten angegeben.

Erfindungsgemäße Beispiele: Werden für bestimmte Anwendungsfälle höhere Festigkeiten sowohl von Stahl, als auch von Lagermetall benötigt, d. h. für Anwendungen, bei denen primär Verschleißbeständigkeit und Ermüdungsfestigkeit gefragt sind, so wird dies mit dem erfindungsgemäßen Verfahren erreicht. Das erfindungsgemäße Verfahren wurde ebenfalls an demselben Werkstoffen Stahl C22 und Lagermetall CuNi2Si durchgeführt:
- Aufgießen der Lagermetallschmelze auf ein Stahlband, Tₘ=1100°C
- Abschrecken von 1100°C auf 300°C, d. h. 800°C in 0,6 min, was einer Abschreckrate von 22 K/s entspricht

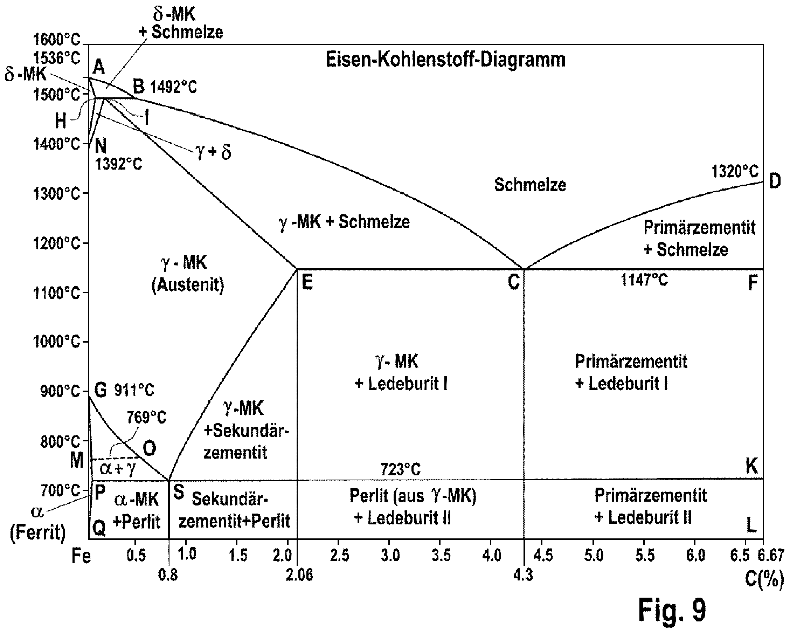

Nach dem Aufgießen wird der Stahl durch die rasche Abkühlung aus dem Austenitgebiet (s. Fig. 9) abgeschreckt und gehärtet.

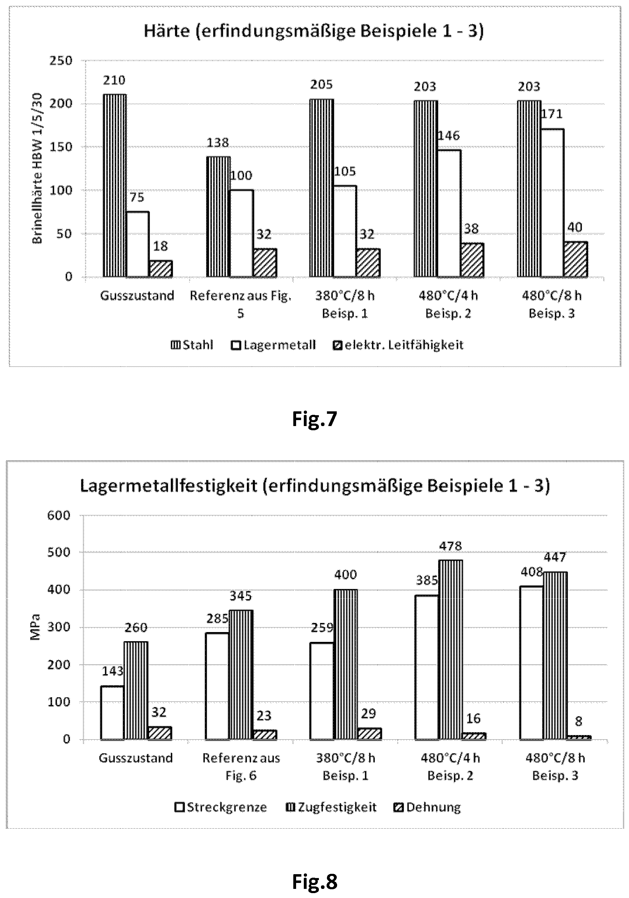

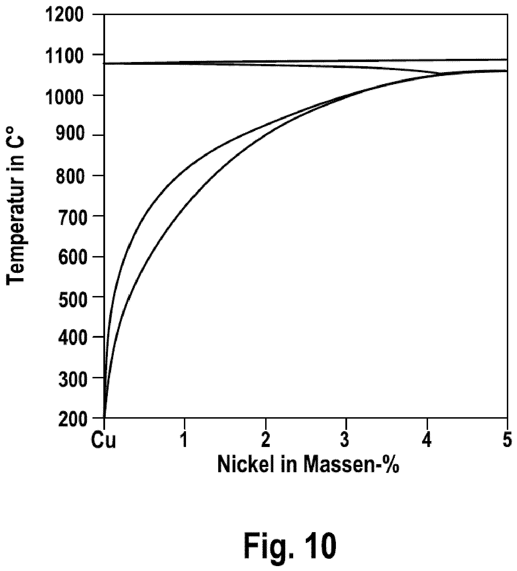

Das Lagermetall CuNi2Si, das flüssig aufgebracht wird, liegt nach der raschen Erstarrung (s. Fig. 10) durch die hohe Abkühlungsrate als übersättigter α- Misch-kristall vor, hat geringe Festigkeiten und sehr hohe Bruchdehnungswerte (siehe Fig. 8, Gußzustand).

Danach erfolgt an dem Gleitlagerverbundwerkstoff keine Homogenisierungsglühung, sondern eine Auslagerung bei Temperaturen von 380°C/ 8h (Beispiel 1), 480°C/ 4h (Beispiel 2) oder 480°C/ 8h (Beispiel 3), also eine Auslagerung im Zweiphasengebiet der CuNi2Si-Legierung (s. Fig. 10), wodurch sich Nickelsilizide im α- Mischkristall bilden, die zu einer deutlichen Härtesteigerung des Lagermetalls führen. Die Härten des Stahls reduzieren sich zwar dadurch geringfügig, liegen aber immer noch deutlich höher als bei dem Vergleichsbeispiel (s. Fig. 7).

Die entsprechenden Fertigkeitswerte sind in Fig. 8 zusammengestellt.

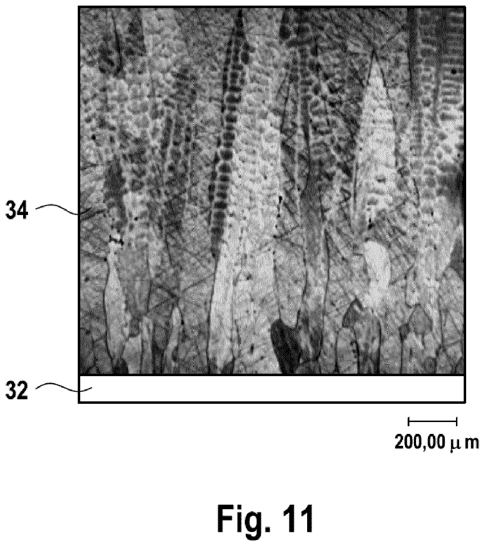

Fig. 11 zeigt ein Schliffbild des Gusszustandes der Lagermetallschicht 34 nach dem erfindungsgemäßen Abschreckvorgang. Die Gefügestruktur zeigt als Folge der raschen Erstarrung (Abschrecken) eine stark ausgeprägte dendritische Struktur und liegt als übersättigter Mischkristall vor.

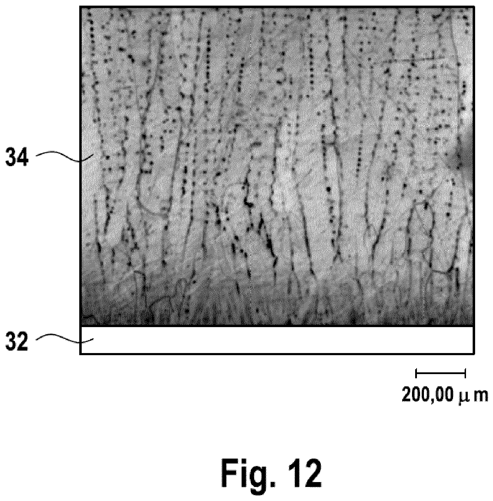

Fig. 12 zeigt ein Schliffbild der Lagermetallschicht 34 nach der Auslagerung gemäß Beispiel 1.

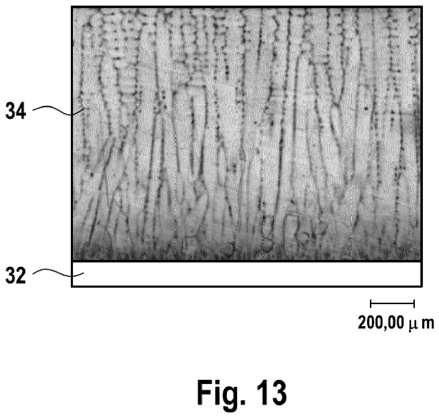

Fig. 13 zeigt ein Schliffbild der Lagermetallschicht 34 gemäß Beispiel 2. Die Stämme der Dendrite erstrecken sich senkrecht zur Ebene der Trägerschicht 32 und es haben sich Ausscheidungen in der Matrix des Lagermetalles gebildet, die die Härtesteigerung bewirken.

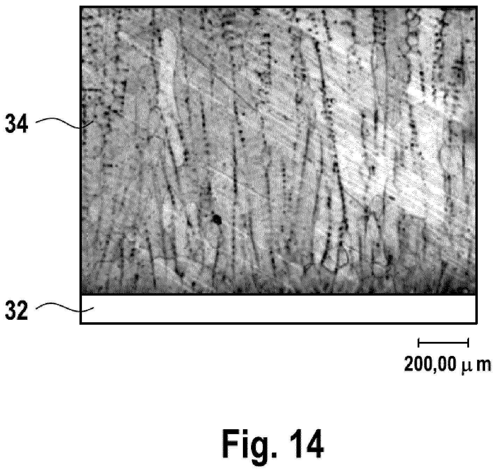

Fig. 14 zeigt ein Schliffbild der Lagermetallschicht 34 gemäß Beispiel 3.

### Bezugszeichenliste

- 1: Bandaufgießanlage
- 2: Abwickelstation
- 3: Stahlbandrolle
- 4: Aufwickelstation
- 5: Verbundwerkstoffrolle
- 6: Bandmaterial aus Stahl
- 8: Profilierstation
- 9: Rand

- 10: Vorheizstation
- 11: Heizelement
- 12: Aufgießstation
- 13: Schmelzbehälter
- 14: Lagermetallschmelze
- 15: erstarrte Lagermetallschicht
- 16: Abschreckstation
- 17: Sprühdüse
- 18: Abschreckflüssigkeit

- 20: Frässtation
- 24: Auslagerungsstation
- 25: Verbundmaterial
- 26: Rückseite des Verbundmaterials

- 30: Gleitlagerverbundwerkstoff
- 32: Trägerschicht
- 34: Lagermetallschicht
- 36: Gleitschicht
- 40: Gleitlagerelement
- 42: Gleitlagerschale
- 44: Ventilplatte

- D₁: Dicke Stahlschicht
- D₂: Dicke Lagermetallschicht
- T₀: Vorheiztemperatur
- T_{M}: Temperatur der Schmelze
- T₁: Temperatur nach Abschreckung
- T_{A}: Temperatur der Auslagerung

- t_{A}: Abschreckzeit
- t_{G1}: Gesamtzeit des Verfahrens nach Stand der Technik
- t_{G2}: Gesamtzeit des erfindungsgemäßen Verfahrens

## Patentansprüche

1. Verfahren zur Herstellung von Gleitlagerverbundwerkstoffen (30), bei dem eine Lagermetallschmelze (14) aus einer Kupferlegierung auf ein Bandmaterial (6) aus einem Stahl aufgegossen wird und das Verbundmaterial (25) aus Bandmaterial (6) und Lagermetall (14) anschließend einer Wärmebehandlung unterzogen wird,
**dadurch gekennzeichnet,**
**dass** nach dem Aufgießen des Lagermetalls (14) das Verbundmaterial (25) von der Schmelztemperatur auf eine Temperatur T₁ von 150°C bis 250°C innerhalb einer Zeitspanne von weniger als zwei Minuten abgeschreckt wird und
danach ein Auslagerungsvorgang angeschlossen wird, wobei der Auslagerungsvorgang bei einer Temperatur zwischen 350°C und 520°C über vier bis zehn Stunden durchgeführt wird.

2. Verfahren nach Anspruch 1, **dadurch gekennzeichnet, dass** der Auslagerungsvorgang bei einer Temperatur zwischen 350°C und 420°C durchgeführt wird.

3. Verfahren nach Anspruch 1, **dadurch gekennzeichnet, dass** der Auslagerungsvorgang bei einer Temperatur zwischen > 420°C bis 520°C durchgeführt wird.

4. Verfahren nach einem der Ansprüche 1 bis 3, **dadurch gekennzeichnet, dass** als Stahl ein austenitischer Stahl verwendet wird.

5. Verfahren nach Anspruch 4, **dadurch gekennzeichnet, dass** austenitischer Stahl mit einem Kohlenstoffanteil von 0,15 % bis 0,40 % verwendet wird.

6. Verfahren nach einem der Ansprüche 1 bis 5, **dadurch gekennzeichnet, dass** die Kupferlegierung aushärtbar ist.

7. Verfahren nach Anspruch 6, **dadurch gekennzeichnet, dass** die Kupferlegierung aus einer Kupfer- Nickel- Legierung, einer Kupfer- Eisen- Legierung, einer Kupfer- Chrom- Legierung oder einer Kupfer- Zirkon- Legierung besteht.

8. Verfahren nach einem der Ansprüche 1 bis 7, **dadurch gekennzeichnet, dass** der Abschreckvorgang unmittelbar nach dem Aufgießvorgang beginnt.

9. Verfahren nach einem der Ansprüche 1 bis 8, **dadurch gekennzeichnet, dass** der Abschreckvorgang innerhalb von 15 bis 25 Sekunden nach dem Aufgießvorgang beginnt.

10. Verfahren nacheinem der Ansprüche 1 bis 9, **dadurch gekennzeichnet, dass** der Abschreckvorgang mit einer Abschreckrate von 10 K/s bis 30 K/s durchgeführt wird.

11. Verfahren nach einem der Ansprüche 1 bis 10, **dadurch gekennzeichnet, dass** das Abschrecken der Kupfer- Nickel- Legierung mit einer Abschreckrate von 15 K/s bis 25 K/s durchgeführt wird.

12. Verfahren nach einem der Ansprüche 1 bis 10, **dadurch gekennzeichnet, dass** das Abschrecken der Kupfer- Eisen- Legierung mit einer Abschreckrate von 15 K/s bis 25 K/s durchgeführt wird.

13. Verfahren nach einem der Ansprüche 1 bis 10, **dadurch gekennzeichnet, dass** das Abschrecken der Kupfer- Chrom- Legierung mit einer Abschreckrate von 10 K/s bis 20 K/s durchgeführt wird.

14. Verfahren nach einem der Ansprüche 1 bis 10, **dadurch gekennzeichnet, dass** das Abschrecken der Kupfer- Zirkon- Legierung mit einer Abschreckrate von 10 K/s bis 20 K/s durchgeführt wird.

15. Verfahren nach einem der Ansprüche 1 bis 14, **dadurch gekennzeichnet, dass** das Abschrecken mittels einer Abschreckflüssigkeit (18) durchgeführt wird.

16. Verfahren nach Anspruch 15, **dadurch gekennzeichnet, dass** zum Abschrecken ein Kühlöl verwendet wird.

17. Verfahren nach einem der Ansprüche 1 bis 16, **dadurch gekennzeichnet, dass** die Rückseite (26) des Verbundmaterials (25) mit der Abschreckflüssigkeit (18) besprüht wird.

## Claims

1. Method for producing composite plain bearing materials (30), in which a bearing metal melt (14) made of a copper alloy is poured onto a strip material (6) made of a steel and the composite material (25) comprising strip material (6) and bearing metal (14) is subsequently subjected to a thermal processing operation,
**characterised in that**,
after the bearing metal (14) is poured, the composite material (25) is quenched from the melt temperature to a temperature T₁ of from 150°C to 250°C within a time period of less than two minutes, and
afterwards an ageing operation is connected, wherein the ageing operation is carried out at a temperature between 350°C and 520°C over from four to ten hours.

2. Method according to claim 1, **characterised in that** the ageing operation is carried out at a temperature between 350°C and 420°C.

3. Method according to claim 1, **characterised in that** the ageing operation is carried out at a temperature between > 420°C to 520°C.

4. Method according to any one of claims 1 to 3, **characterised in that** an austenitic steel is used as the steel.

5. Method according to claim 4, **characterised in that** austenitic steel with a carbon proportion of from 0.15% to 0.40% is used.

6. Method according to any one of claims 1 to 5, **characterised in that** the copper alloy is hardenable.

7. Method according to claim 6, **characterised in that** the copper alloy consists of a copper/nickel alloy, a copper/iron alloy, a copper/chromium alloy or a copper/zirconium alloy.

8. Method according to any one of claims 1 to 7, **characterised in that** the quenching operation begins directly after the pouring operation.

9. Method according to any one of claims 1 to 8, **characterised in that** the quenching operation begins within 15 to 25 seconds after the pouring operation.

10. Method according to any one of claims 1 to 9, **characterised in that** the quenching operation is carried out at a quenching rate of from 10 K/s to 30 K/s.

11. Method according to any one of claims 1 to 10, **characterised in that** the quenching of the copper/nickel alloy is carried out at a quenching rate of from 15 K/s to 25 K/s.

12. Method according to any one of claims 1 to 10, **characterised in that** the quenching of the copper/iron alloy is carried out at a quenching rate of from 15 K/s to 25 K/s.

13. Method according to any one of claims 1 to 10, **characterised in that** the quenching of the copper/chromium alloy is carried out at a quenching rate of from 10 K/s to 20 K/s.

14. Method according to any one of claims 1 to 10, **characterised in that** the quenching of the copper/zirconium alloy is carried out at a quenching rate of from 10 K/s to 20 K/s.

15. Method according to any one of claims 1 to 14, **characterised in that** the quenching is carried out using a quenching fluid (18).

16. Method according to claim 15, **characterised in that** a cooling oil is used for quenching.

17. Method according to any one of claims 1 to 16, **characterised in that** the rear side (26) of the composite material (25) is sprayed with the quenching fluid (18).

## Revendications

1. Procédé de fabrication de matériaux composites (30) pour paliers lisses, dans lequel un bain (14) de métal anti-friction constitué d'un alliage de cuivre est coulé sur un matériau en bande (6) en un acier et le matériau composite (25) constitué du matériau en bande (6) et du métal anti-friction (14) est ensuite soumis à un traitement thermique, **caractérisé en ce que,**
après la coulée du métal anti-friction (14), le matériau composite (25) est trempé, sur une durée inférieure à deux minutes, de la température de fusion à une température T₁ de 150 °C à 250 °C, et
puis on procède à une opération de revenu, l'opération de revenu étant mise en œuvre à une température entre 350 °C et 520 °C pendant quatre à dix heures.

2. Procédé selon la revendication 1, **caractérisé en ce que** l'opération de revenu est mise en œuvre à une température entre 350 °C et 420 °C.

3. Procédé selon la revendication 1, **caractérisé en ce que** l'opération de revenu est mise en œuvre à une température entre > 420 °C et 520 °C.

4. Procédé selon l'une des revendications 1 à 3, **caractérisé en ce qu'**on utilise comme acier un acier austénitique.

5. Procédé selon la revendication 4, **caractérisé en ce qu'**on utilise un acier austénitique ayant une proportion de carbone de 0,15 % à 0,40 %.

6. Procédé selon l'une des revendications 1 à 5, **caractérisé en ce que** l'alliage de cuivre est apte à un durcissement par précipitation.

7. Procédé selon la revendication 6, **caractérisé en ce que** l'alliage de cuivre est constitué d'un alliage cuivre-nickel, d'un alliage cuivre-fer, d'un alliage cuivre-chrome ou d'un alliage cuivre-zirconium.

8. Procédé selon l'une des revendications 1 à 7, **caractérisé en ce que** la trempe commence immédiatement après la coulée.

9. Procédé selon l'une des revendications 1 à 8, **caractérisé en ce que** la trempe commence dans les 15 à 25 secondes après la coulée.

10. Procédé selon l'une des revendications 1 à 9, **caractérisé en ce que** la trempe est mise en œuvre à une vitesse de trempe de 10 K/s à 30 K/s.

11. Procédé selon l'une des revendications 1 à 10, **caractérisé en ce que** la trempe de l'alliage cuivre-nickel est mise en œuvre à une vitesse de trempe de 15 K/s à 25 K/s.

12. Procédé selon l'une des revendications 1 à 10, **caractérisé en ce que** la trempe de l'alliage cuivre-fer est mise en œuvre à une vitesse de trempe de 15 K/s à 25 K/s.

13. Procédé selon l'une des revendications 1 à 10, **caractérisé en ce que** la trempe de l'alliage cuivre-chrome est mise en œuvre à une vitesse de trempe de 10 K/s à 20 K/s.

14. Procédé selon l'une des revendications 1 à 10, **caractérisé en ce que** la trempe de l'alliage cuivre-zirconium est mise en œuvre à une vitesse de trempe de 10 K/s à 20 K/s.

15. Procédé selon l'une des revendications 1 à 14, **caractérisé en ce que** la trempe est mise en œuvre avec un liquide de trempe (18).

16. Procédé selon la revendication 15, **caractérisé en ce qu'**on utilise pour la trempe une huile de refroidissement.

17. Procédé selon l'une des revendications 1 à 16, **caractérisé en ce que** la face arrière (26) du matériau composite (25) est aspergée du liquide de refroidissement (18).
